# EUROPEAN PATENT APPLICATION

(11) **EP 1 688 779 A1**
(43) Date of publication of application: **09.08.2006**
(21) Application number: 06100567.4
(22) Date of filing: 19.01.2006
(51) Int. Cl.: G02B 27/09, H04N 9/31, G03B 21/00

(54) **Light tunnel for projection apparatus**

(30) Priority: 04.02.2005 KR 2005010764
(71) Applicant: Samsung Electronics Co., Ltd, Suwon-si, Gyeonggi-do 442-742 (KR)
(72) Inventor: Kim, Jin-sik, 541-1802, Sinnamusil Ssangyong Apt., Suwon-si, Gyeonggi-do (KR); Kim, Sung-tae, 601-307, Samik Apartment, Seoul (KR); Nho, Jeong-ho 102-2203, Punglim 3rd I-won Apt 1093, Suwon-si, Gyeonggi-do (KR); Jeon, Kee-uk, 802-1405, 801-803 Hyundai Apartment, Seoul (KR)
(74) Representative: Read, Matthew Charles

(57) **Abstract**

A light tunnel (532) for standardising the intensity distribution of light emitted from a light source (520) comprises four trapezoidal reflective surfaces, an incident plane (532a) and an emitting plane (532b). The size of the emitting plane (532b) is larger than that of the incident plane (532a) and the emitting plane (532b) is inclined at a certain angle (θ) relative to the incident plane (532a). The degree of optical separation and image forming efficiency of an illumination light is improved relative to prior rectangular, wedge and taper type light tunnels. The improved optical separation also results in an improved contrast ratio, while allowing the optical system, and a projection apparatus comprising the optical system, to be compact.

## Description

The present invention relates to a light tunnel and a projection apparatus having the same. More particularly, the present invention relates to a light tunnel and a projection apparatus that improves the degree of optical separation and the image formation efficiency of an illumination light by using a light tunnel that incorporates features of both wedge and taper type light tunnels.

A projection apparatus is a display apparatus that enlarges and projects an optical image formed by an image display device onto a projection surface, such as a screen. The projection apparatus can receive image signals from various devices such as a television (TV), a video cassette recorder (VCR), a digital versatile disk (DVD) player, a personal computer (PC) or a camcorder, and projects an optical image, enlarged by a lens, onto a screen.

Projection apparatuses can be categorised as first-generation CRT (Cathode Ray Tube) type, second-generation LCD (Liquid Crystal Display) type, or third-generation DMD (Digital Micro-mirror Device) type devices, according to the image display device used by the projection apparatus.

A LCD type projection apparatus has some drawbacks, such as the complexity of its manufacturing process and low luminous intensity. Consequently, DMD type projection apparatuses have become more widely used recently, due to their ability to form high-resolution images in a fully-digital manner. The DMD used in a DLP (Digital Light Processing) system is a semiconductor light switch that rotates a plurality of micro-mirrors on a DMD panel and reflects a transmitted light either onto (ON) or away from (OFF) a projection system to form an optical image.

Conventionally, a projection apparatus includes a light tunnel to convert a point light source generated by a lamp into a surface light source. The light tunnel is also referred to as a light integrator, a light pipe or a glass rod.

The light emitted from the light tunnel is intensified in accordance with the size of the DMD by passing it through an illumination lens. A plurality of micro-mirrors are rotatably mounted in the DMD so that they can be rotated with respect to a certain axis of the DMD and its parallel axis. A controller controls the rotation of each micro-mirror in accordance with image data. In this way, each micro-mirror reflects incident light from the light source either onto the projection system (ON) or away from (OFF) the projection system.

The light reflected by a micro-mirror in the ON state is directed onto the projection system, while the light reflected by a micro-mirror in the OFF state is directed away from the projection system. Therefore, a pixel corresponding to a micro-mirror in the OFF state is seen as black, while a pixel corresponding to a micro-mirror in the ON state is seen as red, green, blue or a mixed color. An optical image is formed by the combination of the light reflected by each micro-mirror mounted in the DMD. The projection system compensates for any chromatic aberrations in the optical image, enlarges the optical image and projects the optical image onto a screen.

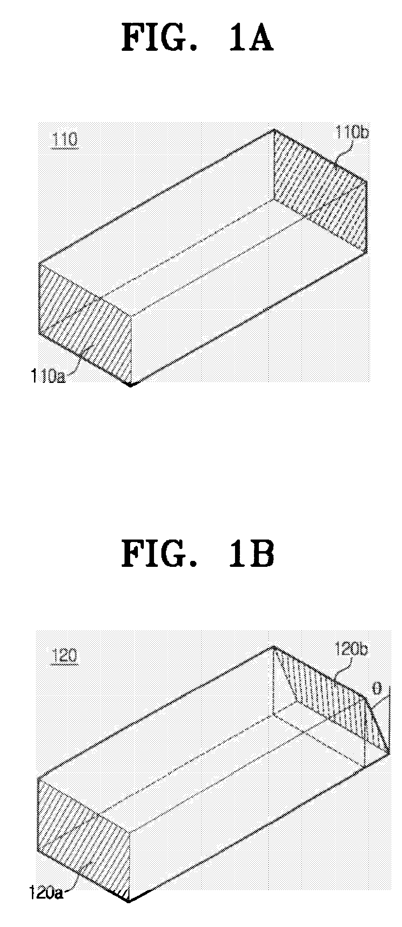

Figure 1A is a perspective view of a conventional rectangular-type light tunnel. The light tunnel 110, shown in Figure 1A, has an appearance similar to a matchbox, and is formed from four rectangular mirrors. The mirrors are arranged in such a way that light is reflected inside the light tunnel. This type of rectangular light tunnel is the most commonly used light tunnel. As illustrated in Figure 1A, the shape of an incident plane 110a is the same rectangular shape as that of an emitting plane 110b, and the planes 110a and 110b are parallel to each other.

Figure 1B is a perspective view of a conventional wedge-type light tunnel. As shown in Figure 1B, the wedge-type light tunnel 120 is formed from two rectangular mirrors and two trapezoidal mirrors, and the incident plane 120a and the emitting plane 120b are not parallel to each other. Instead, the emitting plane 120b is inclined at a certain angle θ with respect to the incident plane 120a.

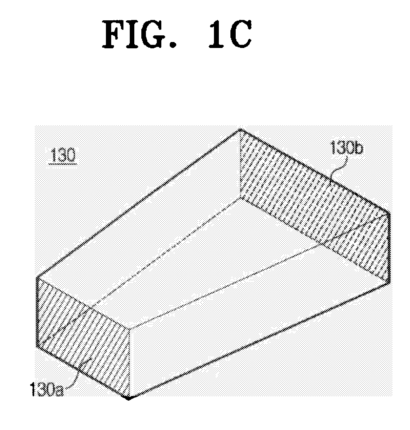

Figure 1C is a perspective view of a conventional taper-type light tunnel. In the taper-type light tunnel 130, the incident plane 130a and the emitting plane 130b are parallel to each other, but their sizes are different. For example, when the incident plane is 4"x4" (10.2 cm x 10.2 cm), the emitting plane may be 6"x4" (15.2 cm x 10.2 cm).

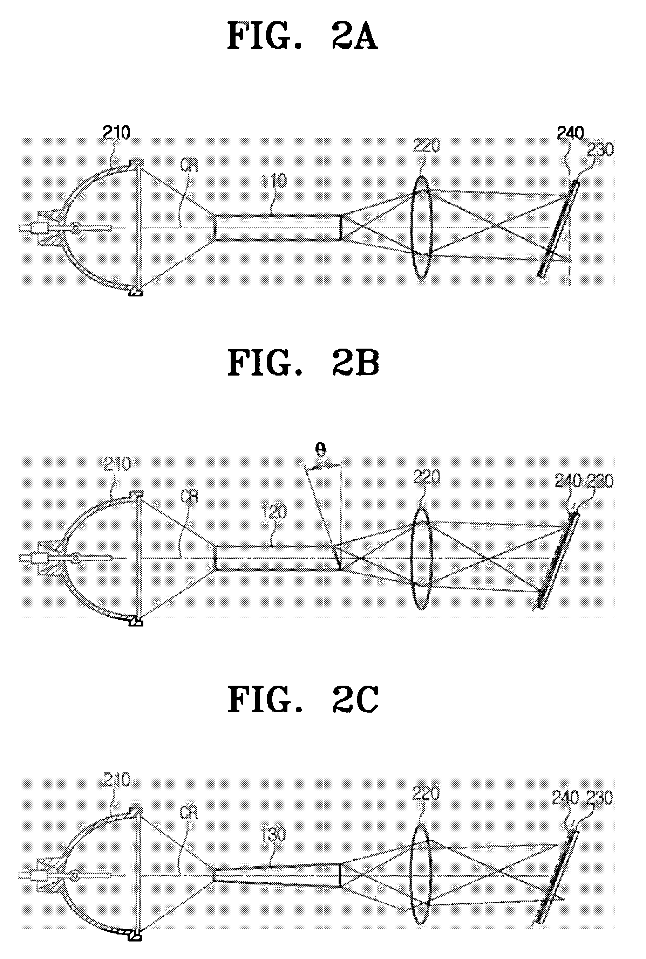

Figure 2A is a schematic drawing of an illumination system having a rectangular-type light tunnel 110. In the illustrated system, the reflector is an elliptical reflector. Accordingly, light coming from a close focal point to the light source 210 is focused at a distant focal point. The light is directed into the light tunnel 110 as a point light source and is emitted from the light tunnel 110 as a surface light source.

The emitted light is spread out, in accordance with the size of the DMD 230, by an illumination lens 220. Because the DMD reflects the light emitted from the light tunnel, it is inclined relative to the optical axis CR. Therefore, as illustrated in Figure 2A, the illuminative image-forming plane 240 is at an angle with respect to the plane of the DMD 230. As a result, the image-forming efficiency of the conventional rectangular-type light tunnel is poor.

Figure 2B is a schematic drawing of an illumination system having the wedge-type light tunnel 120. As shown in Figure 2B, the wedge-type light tunnel 120 is inclined at a certain angle relative to the illumination lens 220, and therefore, the image plane 240 is also inclined at a certain angle relative to the illumination lens. Thus, the wedge-type light tunnel 120 may overcome the drawback of the rectangular-type light tunnel 110, and have image-forming efficiency because the illuminative image-forming plane 240 is aligned with the plane of the DMD 230.

Figure 2C is a schematic drawing of an illumination system having the taper-type light tunnel 130. When the taper-type light tunnel is used, the incident angle on the reflective plane inside the light tunnel becomes large, and the reflective angle also becomes large. Therefore, the light emitted from the light tunnel has a narrow angular distribution of light and an improved degree of optical separation, which leads to a compact and slim illumination system.

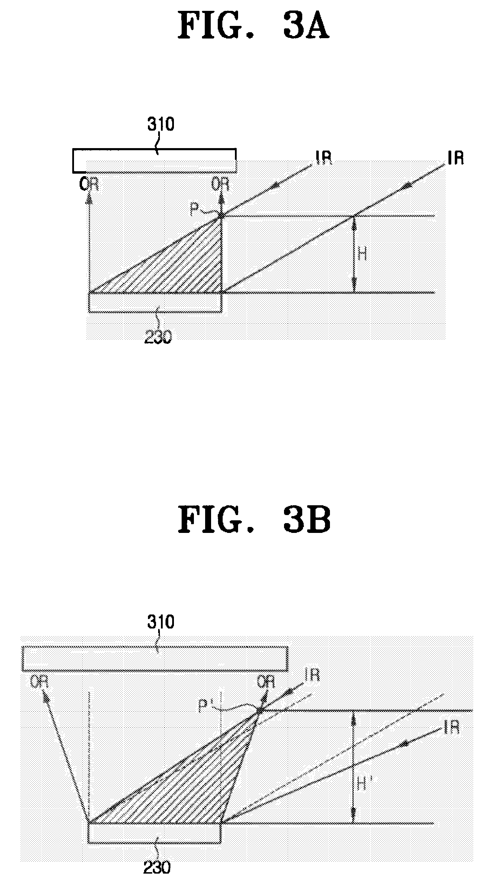

Details of the degree of optical separation will now be discussed with reference to Figures 3A and 3B, which illustrate the optical separation of the light tunnel shown in Figure 2C. Figures 3A and 3B illustrate a process in which incident light IR from the illumination system, not illustrated, is reflected by the DMD 230 and the emitted light OR is incident onto the projection system 310.

As shown in Figure 3A, there is an area, indicated by shading, where the incident light IR and the emitted light OR overlap. This overlap causes degradation of image quality due to interference between the incident light IR and the emitted light OR. The farthest point from the DMD 230 in the overlap region is called the optical separation point P. The shorter the distance H between the optical separation point P and the DMD, the higher the degree of optical separation. The higher the degree of optical separation, the higher the contrast ratio. The above distance H is the shortest distance from the DMD 230 at which the projection system 310 can be installed. Therefore, if the distance H is reduced, the projection system can be positioned closer to the DMD to make a compact optical system.

As shown in Figure 3B, if the light has a wide angular distribution, the optical separation point P' is further away from the DMD 230. In addition, the distance H' between the optical separation point P' and the DMD 230 is also increased and, thus, the degree of optical separation is degraded. Therefore, a wide angular distribution of light degrades the contrast ratio and makes it difficult to make a compact optical system.

A wedge-type light tunnel can improve the image-forming efficiency of the illumination light but it cannot improve the degree of optical separation of the optical system. By way of contrast, a taper-type light tunnel can improve the degree of optical separation but cannot improve the image forming efficiency.

Accordingly, there is a need for an improved light tunnel for a projection apparatus which provides both an improved degree of optical separation and improved image forming efficiency.

An aspect of the present invention is to address at least the above problems and/or disadvantages and to provide at least the advantages described below. Accordingly, an aspect of the present invention is to provide a light tunnel and a projection apparatus having the same. More specifically, an aspect of the present invention is to provide a light tunnel and a projection apparatus having the same that can provide an improved degree of optical separation and an improved image-forming efficiency of an illumination light by using a light tunnel that incorporates features of both wedge- and taper-type light tunnels.

According to the invention, a light tunnel comprises an incident plane for receiving light from a light source and an emitting plane through which light can by discharged from the light tunnel, wherein the size of the emitting plane is larger than that of the incident plane and the emitting plane is inclined at an angle relative to the incident plane.

The light tunnel may be formed by affixing the longer sides of four trapezoidal mirrors together, where the term trapezoidal indicates a quadrilateral shape having two parallel sides. The incident and emitting planes of the light tunnel may be rectangular, and the light path from the incident plane to the emitting plane may be a hollow space.

The light tunnel may be formed from a hexahedral glass rod, and the incident and emitting planes may be rectangular. In addition, the light path from the incident plane to the emitting plane may be solid glass.

The invention also provides, a projection apparatus comprising a light source for providing a point of light, said light tunne,1 for converting the emitted point of light into a surface light.

The projection apparatus may comprise an illumination system for reflecting and emitting the surface light by means of a reflective mirror.

The projection apparatus may comprise an imaging device, for example, a Liquid Crystal Display (LCD) or Liquid Crystal on Silicon (LCOS), arranged to convert the surface light into an optical image. Another example of a suitable imaging device is a Digital Micro-mirror Device, which would include a plurality of micro-mirrors rotatably installed on a substrate and means for controlling said micro-mirrors.

When an imaging device is provided, the projection apparatus may comprise a projection system for enlarging and projecting the optical image formed by the imaging device and, optionally, a screen onto which the optical image enlarged by the illumination system is projected.

Embodiments of the invention will now be described, by way of example, with reference to the accompanying drawings, of which:
Figure 1A is a perspective view of a conventional rectangular-type light tunnel;
Figure 1B is a perspective view of a conventional wedge-type light tunnel;
Figure 1C is a perspective view of a conventional taper-type light tunnel;
Figure 2A is a schematic drawing that shows the operation of an illumination system having the conventional rectangular-type light tunnel of Figure 1A;
Figure 2B is a schematic drawing that shows the operation of an illumination system having the conventional wedge-type light tunnel of Figure 1B;
Figure 2C is a schematic drawing that shows the operation of an illumination system having the conventional taper-type light tunnel of Figure 1C;
Figures 3A and 3B are schematic drawings that show the degree of optical separation of the system shown in Figure 2C;
Figure 4 is a sectional view of a projection apparatus according to an embodiment of the invention;
Figure 5 is an exploded perspective view of the illumination system and the projection system of Figure 4;
Figure 6 is a perspective view of the light tunnel of the light tunnel of Figure 5, which simultaneously uses both the wedge and taper-types designs;
Figure 7 is a schematic diagram that shows the operation of the illumination system having the light tunnel of Figure 6; and
Figures 8 and 9 depict an incident light distribution of the light tunnel according to an embodiment of the invention and an emitted light distribution of the light tunnel of Figure 6, respectively.

Throughout the drawings, the same drawing reference numerals will be understood to refer to the same elements, features, and structures.

In the following detailed description, the descriptions of well-known functions and constructions are omitted for clarity and conciseness.

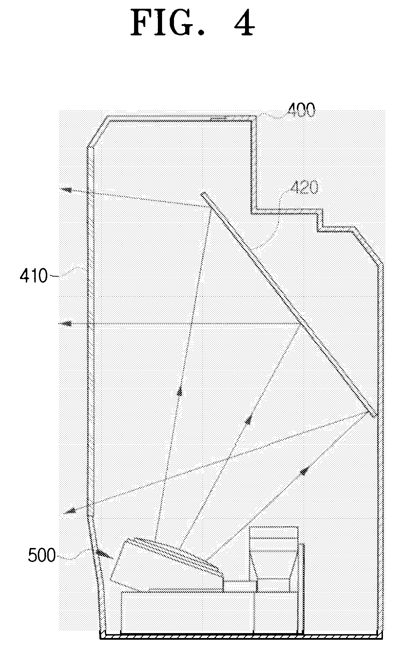

Referring to Figure 4, a projection apparatus according to one embodiment of the invention comprises a main body 400 that forms the external housing of the projection apparatus. A screen 410 is fixed on the main body 400 and a screen reflective mirror 420 enlarges and reflects an optical image onto the screen 410. An optical engine 500 forms and projects the optical image onto the screen reflective mirror 420.

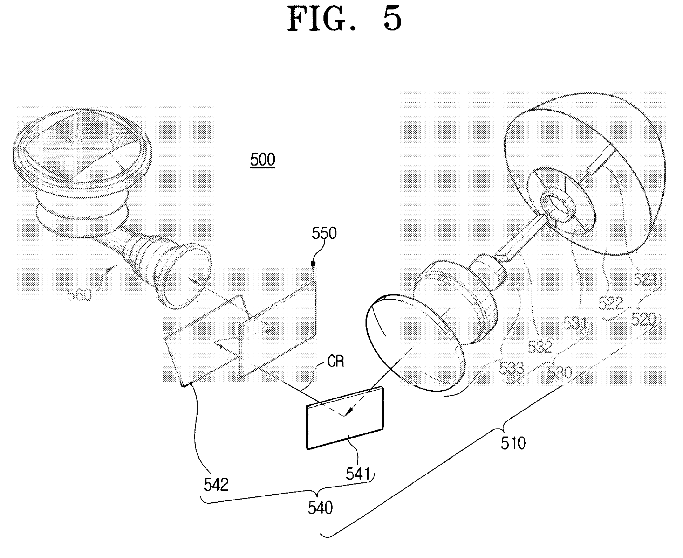

Referring to Figure 5, the optical engine 500 comprises an illumination system 510, a DMD 550 and a projection system 560. The illumination system 510 is also called an illuminating optical system and the projection system 560 is also called a projecting optical system.

The illumination system 510 includes a light source 520, a relay lens unit 530 and a reflective mirror unit 540.

The light source 520 includes a lamp 521 for generating light and an elliptical reflective mirror 522 for collecting the light generated by the lamp 521 and directing it to the relay lens unit 530.

In another embodiment of the invention, a parabolic reflective mirror is used in place of the elliptical reflective mirror 522. In this case, the light generated at the focal point is emitted in parallel, and a lens for collecting the parallel light should be used prior to the relay lens unit 530.

An arc lamp, a halogen lamp, an Ultra-High Performance (UHP) high intensity discharge lamp, or the like can be used as the lamp 521.

The relay lens unit 530 includes a color filter 531, a light tunnel 532 and a plurality of illumination lenses 533. The color filter 531 sequentially separates red, green and blue light from the light generated by the light source 520. The light tunnel 532 not only uniformly standardizes the density of the separated color light, but also forms the light into a rectangular shape. The multiple illumination lenses 533 collect the light passed through the light tunnel and provide it to the reflective mirror unit 540.

The reflective mirror unit 540 includes a first reflective mirror 541 and a second reflective mirror 542. The first reflective mirror 541 receives incident light passed through the multiple illumination lenses 533 and reflects incident light onto the second reflective mirror 542. In addition, the second reflective mirror 542 reflects the light reflected by the first reflective mirror 541 onto the DMD 550.

In the illustrated exemplary embodiment of the invention, two reflective mirrors 541 and 542 are used for projecting the light onto the DMD 550. One reflective mirror may be used, however, when the illumination system 510 is arranged at an appropriate position and angle.

The DMD 550 includes a substrate having a patterned electrical circuit, and a plurality of micro-mirrors rotatably installed on the substrate. The substrate has a rectangular shape having a major and a minor axis. The aspect ratio of the rectangular shape is preferably the same as that of the screen. In other words, the DMD 550 preferably has the same 16:9 or 4:3 aspect ratio as that of a conventional screen. In addition, the electrical circuit pattern on the substrate is electrically connected to a controller, which is not shown. The micro-mirrors independently rotate in accordance with a signal from the controller to thereby determine the reflection angle (ON or OFF) of incident light (IR), and irradiate a light of suitable color onto a pixel of the screen 410, shown in Figure 4.

The micro-mirror, when rotated to a certain positive angle (+θ'), reflects incident light (IR) into the projection system 560 for projection onto the screen 410, to form a pixel corresponding to the micro-mirror. That is, the when the micro-mirror is rotated to +θ', the micro-mirror is ON. In contrast, when the micro-mirror is rotated to a certain negative angle (-θ'), the mirror reflects incident light (IR) away from the projection system 560, and the micro-mirror is OFF.

The projection system 560 is an apparatus for enlarging and projecting the optical image formed by the DMD 550 and includes at least one reflective mirror and a plurality of lenses for compensating for various aberrations in the optical image.

The aberrations become larger as the so-called BFL (Back Focal Length), the distance from the DMD 550 to a fixed point of the most rearward lens of the projection system 560 (like H shown in Figure 3A), becomes greater. Therefore, in a projection system having a relatively large BFL, the number of lenses required for compensating for the aberrations is increased. Moreover, designing the arrangement of the lens and the specifications for the lens becomes more difficult when the BFL is increased. Therefore, the quality of the image projected onto the screen 410 degrades as the BFL becomes greater. As such, the BFL is an important factor in determining image quality and the size of the optical engine and significant efforts are made in order to shorten its length.

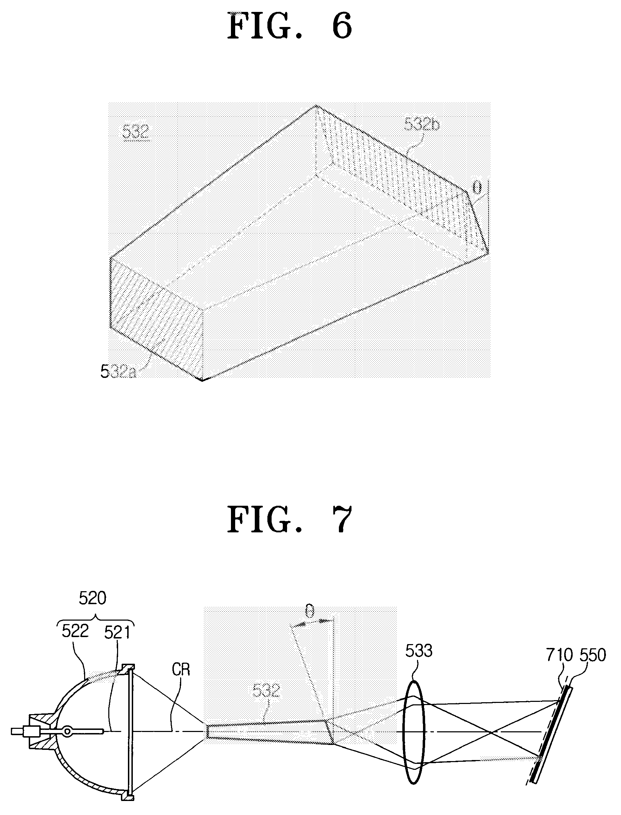

A light tunnel according to an embodiment of the invention will now be explained in detail. Figure 6 is a perspective view of a light tunnel that includes features of both wedge and taper-type designs.

The light tunnel of Figure 6 is configured so that reflection occurs inside the light tunnel by forming the sides of the light tunnel from four mirrors. Specifically, the light tunnel is formed by providing four trapezoidal mirrors. In other words, each of the four mirrors is a quadrilateral having two parallel sides. The incident plane 532a and the emitting plane 532b are not parallel to each other and the emitting plane 532b is inclined at a certain angle θ, in a similar manner to the incident and emitting planes in a wedge-type design. In addition, the incident plane and the emitting plane are of different sizes, in a similar manner to the incident plane and emitting plane of a taper-type design.

In another embodiment of the invention, the light tunnel may be formed from a hexahedral glass rod incorporating features of wedge and taper-type light tunnels so that the incident and emitting planes are non-parallel and of different sizes. Such a light tunnel has a structure filled with glass andincident light is emitted after total reflection inside the glass rod.

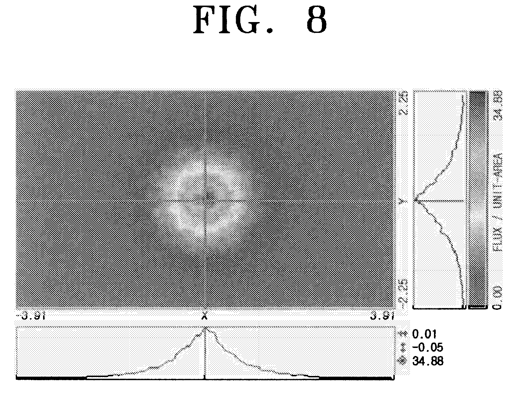

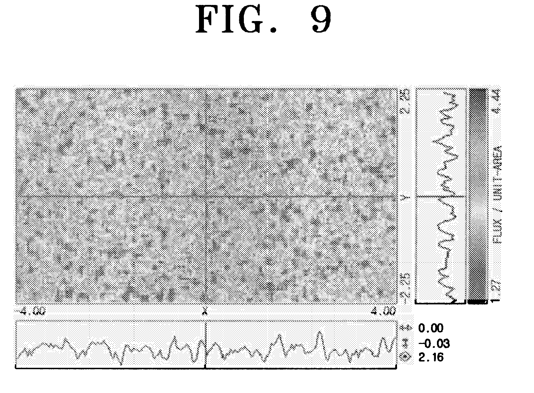

Figure 7 is a schematic drawing of the illumination system 510, including the light tunnel 532 of Figure 6. Figure 8 shows the incident light distribution of the light tunnel 532, and Figure 9 shows the emitted light distribution of the light tunnel of Figure 6.

Since the reflective mirror 522 of the light source 520 is elliptical, light emitted from the close focal point of the light source 520 is focused onto a distant focal point. Therefore, as illustrated in Figure 8, the point light source is projected onto the light tunnel 532 and then, as illustrated in Figure 9, is emitted as a surface light source. The emitted light is spread by the illumination lens 533 to correspond with the size of the DMD 550.

The DMD 550 is inclined relative to the optical axis CR for reflecting the light emitted from the light tunnel. Therefore, as illustrated in Figure 7, as the light tunnel 532 includes a wedge portion, similar to a wedge type light tunnel, that is inclined at a certain angle θ relative to the illumination lens 533, image forming efficiency is improved because the illumination plane 710 coincides with the plane of the DMD 550.

In addition, due to the tapered form of the light tunnel 532, the incident angle on the reflective plane is increased and the reflective angle is also increased when compared with a conventional rectangular or wedge type light tunnel. Therefore, the light emitted from the light tunnel 532 has a narrow angular distribution and improved degree of optical separation to thereby achieve a compact and slim illumination system. Therefore, the light tunnel 532 can provide light having an improved degree of optical separation and an improved image forming efficiency when compared with the prior light tunnels described above.

In the embodiments described above, the light tunnel 532 has been used to provide light in a projection apparatus comprising a DMD. However, the light tunnel may also be used in a projection apparatus having a different optical imaging device, such as a LCD (Liquid Crystal Display) or a LCOS (Liquid Crystal on Silicon).

As discussed above, in relation to the described embodiments, a light tunnel that uses features of both wedge and taper-types light tunnels can improve the degree of optical separation and image forming efficiency of aprojection apparatus. The improved degree of optical separation improves the contrast ratio, while also provided a compact illumination system.

While the invention has been shown and described with reference to certain exemplary embodiments thereof, it will be understood by those skilled in the art that various changes in form and details may be made therein without departing from the scope of the invention as defined by the appended claims.

## Claims

1. A light tunnel comprising:
an incident plane (532a) for receiving light from a light source (520); and
an emitting plane (532b) through which light can by discharged from the light tunnel (532);
wherein:
the size of the emitting plane (532b) is larger than that of the incident plane (532a);
**characterised in that**:
the emitting plane (532b) is inclined at an angle (θ) relative to the incident plane (532a).

2. A light tunnel (532) as claimed in claim 1, comprising four trapezoidal reflective surfaces, wherein the incident plane (532a) and the emitting plane (532b) are defined by peripheral edges of said reflective surfaces.

3. A light tunnel (532) as claimed in claim 2, wherein:
the light tunnel is formed by four trapezoidal mirrors that provide said reflective surfaces;
the incident and emitting planes (532a, 532b) are rectangular; and
a light path from the incident plane (532a) to the emitting plane (532b) is a hollow space.

4. A light tunnel as claimed in claim 2, wherein:
the light tunnel is formed from a hexahedral glass rod;
the incident and emitting planes are rectangular; and
a light path from the incident plane to the emitting plane is solid glass.

5. A projection apparatus comprising:
a light source (520) for providing a point of light; and
a light tunnel (532) according to any one of claims 1 to 4, arranged to convert the point of light provided by the light source into a surface light,.

6. The projection apparatus as claimed in claim 5, comprising:
an illumination system (530, 540) for reflecting and emitting the surface light by means of a reflective mirror (541, 542).

7. The projection apparatus as claimed in claim 5 or 6, comprising:
an imaging device (550) arranged to convert the surface light into an optical image.

8. The projection apparatus as claimed in claim 7,wherein:
the imaging device (550) is a Digital Micro-mirror Device.

9. The projection apparatus as claimed in claim 7, wherein:
the imaging device is a Liquid Crystal Display or an Liquid Crystal on Silicon.

10. The projection apparatus as claimed in claim 7, 8 or 9, comprising:
a projection system for enlarging and projecting the optical image formed by the imaging device (550).

11. The projection apparatus as claimed in claim 10, comprising
a screen (410) onto which the optical image, enlarged by the projection system (560), is projected.

12. The projection apparatus as claimed in any one of claims 7 to 11, wherein:
the imaging device (550) has a light receiving plane arranged to receive said surface light; and
the emitting plane (532b) and the light receiving plane of the imaging device (550) are inclined at opposite angles to one another with respect to an optical axis (CR) of the projection apparatus.

13. The projection apparatus as claimed in claim 12, wherein said opposite angles are equal.
